(19) Europäisches Patentamt / European Patent Office / Office européen des brevets

(11) **EP 3 805 825 A1**

(12) **EUROPEAN PATENT APPLICATION**
published in accordance with Art. 153(4) EPC

(43) Date of publication:
**14.04.2021 Bulletin 2021/15**

(51) Int Cl.:
**G02B 5/30** *(2006.01)*    **B32B 7/02** *(2019.01)*

(21) Application number: **19812031.3**

(22) Date of filing: **28.05.2019**

(86) International application number:
**PCT/KR2019/006387**

(87) International publication number:
**WO 2019/231213 (05.12.2019 Gazette 2019/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.05.2018 KR 20180060693**

(71) Applicant: **LG CHEM, LTD.**
**Yeongdeungpo-gu,**
**Seoul 07336 (KR)**

(72) Inventors:
• **KIM, Young Gon**
**Daejeon 34122 (KR)**
• **KIM, Gae Sung**
**Daejeon 34122 (KR)**
• **LEE, Hyun Soo**
**Daejeon 34122 (KR)**
• **KIM, Keon Woo**
**Daejeon 34122 (KR)**
• **LEE, Eungki**
**Daejeon 34122 (KR)**
• **YEO, Jun Gu**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **POLARIZING PLATE, METHOD FOR MANUFACTURING SAME, AND IMAGE DISPLAY DEVICE COMPRISING SAME**

(57)    The present specification provides a polarizing plate, a method for preparing the same, and an image display device comprising same.

【FIG. 1】

EP 3 805 825 A1

## Description

[Technical Field]

This application claims priority to and the benefits of Korean Patent Application No. 10-2018-0060693, filed with the Korean Intellectual Property Office on May 28, 2018, the entire contents of which are incorporated herein by reference.

The present specification relates to a polarizing plate, a method for preparing the same, and an image display device comprising same.

[Background Art]

Existing polarizing plates for a liquid crystal display device use a general polyvinyl alcohol-based polarizer, and have a constitution of attaching a low moisture-permeable substrate layer such as TAC on at least one side surface of the polarizer.

In a recent polarizing plate market, demands for low light leakage and thinning have increased, and in order to satisfy these properties, a method of directly forming a protective film on a polarizer has been examined instead of using an existing protective substrate formed as a film in advance.

However, when directly forming a protective film on an existing polyvinyl alcohol-based elongation-type polyvinyl alcohol-based polarizer, a problem of the polarizer being torn by stress generated from polarizer shrinkage at a high temperature has been difficult to resolve compared to when using a protective substrate on both surfaces as in the art.

Prior Art Documents

Patent Documents

Japanese Patent Application Laid-Open Publication No. 2007-047498 A

[Disclosure]

[Technical Problem]

The present specification is directed to providing a polarizing plate, a method for preparing the same, and an image display device comprising same.

[Technical Solution]

One embodiment of the present specification provides a polarizing plate comprising a polarizer; a low moisture-permeable substrate layer provided on one surface of the polarizer; and a protective layer provided on the other surface of the polarizer, wherein the protective layer has a thickness of greater than or equal to 4.5 $\mu$m and less than or equal to 10 $\mu$m, and the protective layer is a resin layer comprising an active energy ray-curable composition comprising an epoxy compound and an oxetane compound or a cured material thereof.

Another embodiment of the present specification provides a method for preparing the polarizing plate described above, the method comprising preparing a polarizer; providing a low moisture-permeable substrate layer on one surface of the polarizer; and forming a protective layer on the other surface of the polarizer.

Another embodiment of the present specification provides an image display device comprising the polarizing plate described above.

[Advantageous Effects]

A polarizing plate according to one embodiment of the present specification has an advantage of suppressing crack occurrences on a polarizer under a high temperature and high humidity environment while having a small protective layer thickness.

In addition, a polarizing plate according to one embodiment of the present specification has excellent durability under a high temperature and high humidity environment, and thereby has an advantage of suppressing light leakage when used in a liquid crystal display device having a large area.

[Description of Drawings]

FIG. 1 illustrates a polarizing plate according to one embodiment of the present specification.
FIG. 2 illustrates an image display device according to another embodiment of the present specification.
FIG. 3 shows crack occurrences on a polarizing plate according to Comparative Example 1 in Experimental Example 1.
FIG. 4 and FIG. 5 illustrate a method of determining whether it corresponds to a crack.
FIG. 6 to FIG. 8 show results of a degree of planarity experiments according to Experimental Example 2.

[Reference Numeral]

10: Polarizer
20: Protective Layer
30: Low Moisture-Permeable Substrate Layer
40: Adhesive Layer
100: Polarizing Plate
200: Image Display Device

[Mode for Disclosure]

Hereinafter, the present specification will be described in more detail.

One embodiment of the present specification provides a polarizing plate comprising a polarizer; a low moisture-permeable substrate layer provided on one surface of the polarizer; and a protective layer provided on the other surface of the polarizer, wherein the protective layer has a thickness of greater than or equal to 4.5 $\mu$m and less than or equal to 10 $\mu$m, and the protective layer is a resin layer comprising an active energy ray-curable composition comprising an epoxy compound and an oxetane compound or a cured material thereof.

In the present specification, the term curing of composition means a process in which the composition is changed so as to exhibit adhesive or gluing properties by a physical action or a chemical reaction of components of the composition. In addition, the term active energy rays in the present specification may mean a particle beam such as an $\alpha$ particle beam, a proton beam, a neutron beam and an electron beam as well as microwaves, infrared rays (IR), ultraviolet rays (UV), X-rays and $\gamma$-rays, and may commonly be ultraviolet rays, an electron beam or the like. In addition, active energy ray-curable may mean that such curing may be induced by irradiation of active energy rays. In one embodiment of the present disclosure, curing of an active energy ray-curable composition may be conducted through a free radical polymerization or a cation reaction by irradiation of active energy rays, and preferably, a free radical polymerization and a cation reaction may be conducted together simultaneously or consecutively.

A polarizer is commonly prepared with a hydrophilic resin such as polyvinyl alcohol, and therefore, is generally vulnerable to moisture. In addition, since a polarizer generally goes through an elongation process in the preparation, shrinkage and the like readily occur under a humidity condition, which leads to a problem of worsening optical properties and the like of a polarizing plate. Accordingly, in order to enhance properties of a polarizer, a low moisture-permeable substrate layer typified by a polyethylene terephthalate (PET) film or the like is generally attached on both surfaces of the polarizer, and absence of a low moisture-permeable substrate layer causes problems of greatly reducing durability and optical properties due to poor dimensional stability of the polarizer, and significantly weakening water resistance.

For this, in one exemplary structure of the polarizing plate of the present disclosure, a thinner and lighter structure may be obtained by providing a low moisture-permeable substrate layer on one surface of a polarizer, and comprising a protective layer on the other surface of the polarizer, and as a result, by adjusting a thickness of the protective layer to a range of certain level and by forming the protective layer from a composition comprising an epoxy compound and an oxetane compound, excellent high temperature water resistance are secured through enhancing a protecting effect of the protective layer for the polarizer.

In the present specification, a polarizing plate in which a low moisture-permeable substrate layer is not attached on at least one surface of a polarizer as above may also be referred to as a thin polarizing plate (thin polarizer).

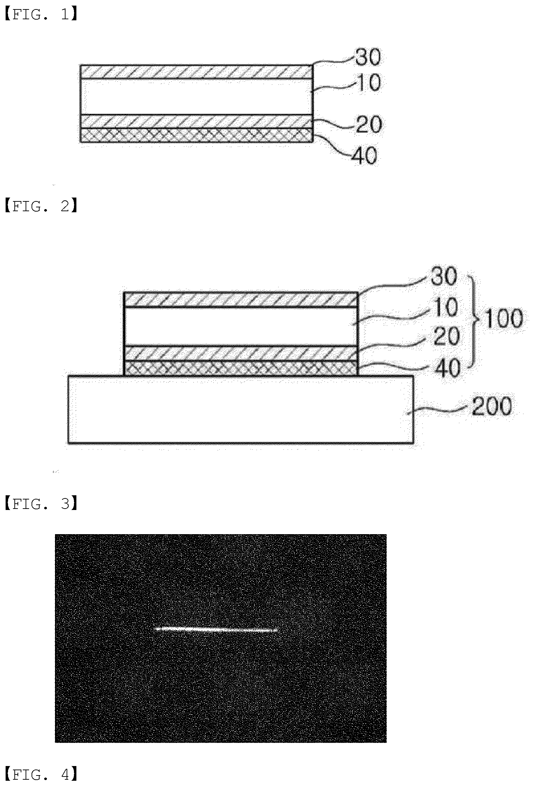

FIG. 1 is a cross-sectional view illustrating the polarizing plate (100). When referring to FIG. 1, the polarizing plate (100) comprises a polarizer (10); a low moisture-permeable substrate layer (30) provided on one surface of the polarizer (10); and a protective layer (20) provided on the other surface of the polarizer (10). In addition, a adhesive layer (40) may be further provided on the other side of the polarizer (10)-adjoining surface of the protective layer (20).

When adjusting a relation between storage modulus of the protective layer and a thickness of the protective layer to a certain range, a polarizer protecting effect of the protective layer may be enhanced. Specifically, the strength coefficient value of the protective layer represented by the following Mathematical Formula 1 may be greater than or equal to 6,750 and less than or equal to 60,000, preferably greater than or equal to 8,100 and less than or equal to 50,000, and more preferably greater than or equal to 9,000 and less than or equal to 40,000. The strength coefficient is a parameter presenting strength of a protective layer, and is calculated by multiplying storage modulus of a protective layer and a thickness of the protective layer. When the strength coefficient value of the protective layer satisfies the above-mentioned numerical range, stress applied to the polarizer is effectively suppressed, which is effective in effectively suppressing crack occurrences on the polarizer caused by shrinkage or expansion of the polarizer under a high temperature or high humidity environment. In addition, there is an advantage of securing excellent adhesive strength for the polarizer.

[Mathematical Formula 1]

Strength coefficient (Mpa*μm)=storage modulus of protective layer x thickness of protective layer

In Mathematical Formula 1, the storage modulus of the protective layer means storage modulus at 80°C under a measurement condition of a temperature range of -10°C to 160°C, a temperature raising rate of 5°C/min and strain of 10%.

In order to secure heat resistance of the polarizing plate or to improve a bending property of the polarizing plate, the protective layer may have its storage modulus adjusted to a certain range. Specifically, under a measurement condition of a temperature range of -10°C to 160°C, a temperature raising rate of 5°C/min and strain of 10%, the protective layer may have storage modulus of greater than or equal to 1,200 Mpa and less than or equal to 10,000 Mpa, preferably greater than or equal to 1,400 Mpa and less than or equal to 9,000 Mpa, and more preferably greater than or equal to 1,600 Mpa and less than or equal to 7,000 Mpa at 80°C. When satisfying the above-mentioned range, the polarizer may be well-protected even when storing the polarizing plate for a long period of time under a high temperature and high humidity environment, and therefore, crack occurrences on the polarizer may be effectively prevented.

Storage modulus of the protective layer may be measured by preparing a specimen having the same composition as the protective layer. Specifically, a photocurable composition having the same composition as the protective layer is coated on a release film (for example, polyethylene terephthalate film) to a thickness of 50 μm, and after curing the result by irradiating ultraviolet rays under a light intensity condition of 1000 mJ/cm$^2$ or greater, the release film is removed, and the specimen is laser cut to a certain size. After that, storage modulus is measured through a dynamic mechanical analyzer (DMA). Herein, storage modulus when constantly tensioning with 10% strain while, as the measurement temperature, raising the temperature up to 160°C from a starting temperature of -10°C at a temperature raising rate of 5°C/min is measured, and a storage modulus value at 80°C is recorded.

The thickness of the protective layer may be adjusted to a certain range in order to provide a polarizing plate having a small overall thickness while securing a protecting effect of the protective layer for the polarizer. Specifically, the protective layer may have a thickness of greater than or equal to 4.5 μm and less than or equal to 10 μm, preferably greater than or equal to 4.5 μm and less than or equal to 8.5 μm, and more preferably greater than or equal to 4.5 μm and less than or equal to 7 μm. When the protective layer has a thickness of less than 4.5 μm, the polarizer protecting function of the protective layer may not be sufficiently secured, and it is difficult to effectively suppress crack occurrences on the polarizer under a high temperature or high humidity environment. In addition, the thickness being greater than 10 μm is not suitable in terms of thinning of the polarizing plate, and therefore, the thickness of the protective layer is adjusted to greater than or equal to 4.5 μm and less than or equal to 10 μm. The thickness of the protective layer may be obtained by measuring a cross section of the polarizing plate through a scanning electron microscope or a transmission electron microscope.

The protective layer may have a thermal expansion coefficient of 100 ppm/K or less, 85 ppm/K or less, greater than or equal to 10 ppm/K and less than or equal to 100 ppm/K, or greater than or equal to 10 ppm/K and less than or equal to 85 ppm/K at 80°C. When the protective layer has a thermal expansion coefficient satisfying the above-mentioned range, properties of the protective layer are maintained under a high temperature condition.

The method of measuring a thermal expansion coefficient of the protective layer is not particularly limited, and for example, a cured specimen having a thickness of 50 μm is cut to a size of a width of 6 mm and a length of 10 mm, and changes in the length are measured while raising a temperature from 30°C to 150°C while maintaining a tension load at 0.05 N. Herein, the temperature raising rate is 5°C/min, and, after the measurement is completed, the thermal expansion coefficient (CTE) value is calculated as a length changed from 40°C to a target temperature. Herein, the target temperature is 80°C.

A bending property of the polarizing plate may be improved by adjusting force of shrinkage of the low moisture-permeable substrate layer. Specifically, when the low moisture-permeable substrate layer is left unattended for 2 hours at a temperature of 80°C, force of shrinkage in a TD direction may be greater than or equal to 1 N and less than or equal to 10 N, greater than or equal to 3 N and less than or equal to 10 N, preferably greater than or equal to 3.5 N and less than or equal to 9.5 N, and more preferably greater than or equal to 4 N and less than or equal to 9 N.

The force of shrinkage may be measured using a dynamic mechanical analyzer (DMA) manufactured by TA Instruments, Inc., and, for example, the analyzer may reach 75°C after 3 minutes starting from 25°C, and may be stabilized at 80°C after 7 minutes. The measurement time is 2 hours, and after being stabilized at 80°C, a value after 120 minutes is measured. As for the measurement method, the sample is clamped to a clamp, and after fixing the sample by pulling the sample so as to main strain at 0.1% at a preload of 0.01 N, force of shrinkage applied when maintaining the strain at 0.1% at a high temperature is measured. Meanwhile, the sample may be prepared to have a width of approximately 5.3 mm and a length of approximately 15 mm, and the force of shrinkage may be measured after fixing both ends in a length direction of the sample to a clamp of the measurement device. The sample length is a length excluding the portion fixed to the clamp.

The MD direction may represent an absorption axis (machine direction) and the TD direction may represent a transmission axis (traverse direction), and the MD direction and the TD direction are orthogonal to each other.

The thickness of the low moisture-permeable substrate layer may be adjusted so that the low moisture-permeable substrate layer more readily blocks moisture. Specifically, the low moisture-permeable substrate layer may have a thickness of greater than or equal to 40 $\mu$m and less than or equal to 100 $\mu$m, greater than or equal to 40 $\mu$m and less than or equal to 80 $\mu$m, preferably greater than or equal to 50 $\mu$m and less than or equal to 80 $\mu$m, and more preferably greater than or equal to 60 $\mu$m and less than or equal to 80 $\mu$m. When the thickness satisfies the above-mentioned numerical range, a moisture permeation preventing effect of the low moisture-permeable substrate layer may be enhanced.

The low moisture-permeable substrate layer is for suppressing moisture and the like from permeating to the polarizer, and may have moisture permeability of 60 g/m$^2$*day or less, preferably 55 g/m$^2$*day or less, and more preferably 50 g/m$^2$*day or less, and for example, greater than or equal to 0.1 g/m$^2$*day and less than or equal to 50 g/m$^2$*day. The moisture permeability means an amount (g) that moisture passes through per unit time (day) and unit area (m$^2$) under a constant external environment, and may be measured under a temperature condition of 40°C or 37.8°C and an environment in which a humidity difference between inside and outside the low moisture-permeable substrate layer is 90%. The method of measuring the moisture permeability is not particularly limited, and for example, the weight (g) of moisture passing through the low moisture-permeable substrate layer for one day under the above-described condition may be measured using a known moisture permeability measurement device. For example, the moisture permeability may be measured using a WVTR device manufactured by Labthink Instruments Co., Ltd. (device name: WVTR TSY-T3). The device has a structure having a scale in a closed chamber, and the environment inside the chamber is maintained at 40°C and humidity of 10%. In addition, after pouring water into a moisture permeable cup, a low moisture-permeable substrate film that is the same as the low moisture-permeable substrate layer covers the cup and is fixed thereon. Humidity inside the moisture permeable cup is 100% since the cup is full of water, and therefore, a humidity difference between inside and outside the moisture permeable cup becomes 90%. After 24 hours, the amount of evaporated water may be calculated after measuring the weight of the moisture permeable cup through a difference from the initial weight. When satisfying the above-mentioned numerical range, a moisture permeation function of the low moisture-permeable substrate layer may be sufficiently performed.

When the force of shrinkage of the low moisture-permeable substrate layer and the thickness of the low moisture-permeable substrate layer are adjusted, overall durability of the polarizing plate may be enhanced by the low moisture-permeable substrate layer. Specifically, a shrinkage coefficient value represented by the following Mathematical Formula 2 may be greater than or equal to 60 and less than or equal to 900, preferably greater than or equal to 100 and less than or equal to 900, and more preferably greater than or equal to 120 and less than or equal to 800. When satisfying the above-mentioned numerical range, the force of shrinkage of the low moisture-permeable substrate layer and the thickness of the low moisture-permeable substrate layer are sufficiently adjusted, and durability of the low moisture-permeable substrate layer may be enhanced.

[Mathematical Formula 2]

$$\text{Shrinkage coefficient (N*\mu m) = force of shrinkage of low moisture-permeable substrate layer} \times \text{thickness of low moisture-permeable substrate layer}$$

In Mathematical Formula 1, the force of shrinkage of the low moisture-permeable substrate layer means force of shrinkage in a TD direction after being left unattended for 2 hours at 80°C.

The low moisture-permeable substrate layer may have excellent optical properties at a level of not harming overall optical properties of the polarizing plate without favorably permeating moisture. Specifically, the low moisture-permeable substrate layer may have permeability of 90% or greater or greater than or equal to 90% and less than or equal to 100%.

Types of the low moisture-permeable substrate layer are not particularly limited as long as they satisfy properties of the low moisture-permeable substrate layer described above. Examples thereof may comprise polyethylene terephthalate (PET).

In order to secure an excellent polarizer protecting effect of the protective layer and excellent moisture permeability of the low moisture-permeable substrate layer, a ratio between the thickness of the protective layer and the thickness of the low moisture-permeable substrate layer may be adjusted. Specifically, the protective layer and the low moisture-permeable substrate layer may have a thickness ratio of 1:3 to 1:20, preferably 1:5 to 1:20, and more preferably 1:7 to 1:20. When satisfying the above-mentioned numerical range, the performance according to Mathematical Formula 1 of the protective layer described above and the performance according to Mathematical Formula 2 of the low moisture-permeable substrate layer may be secured at an excellent level.

The polarizer may have force of shrinkage in an MD direction of greater than or equal to 5 N and less than or equal to 9 N, and preferably greater than or equal to 7.5 N and less than or equal to 8.5 N when left unattended for 2 hours at 80°C.

The polarizing plate may have force of shrinkage in an MD direction or a TD direction of greater than or equal to 5 N and less than or equal to 10 N when left unattended for 2 hours at a temperature of 80°C.

The polarizing plate has excellent durability under a high temperature and high humidity environment. Having excellent durability means having an excellent polarizer protecting effect of the protective layer, and it may be determined by counting the number and the length of cracks produced on the polarizer. Specifically, when leaving the polarizing plate unattended for 1,000 hours at 80°C, the length of cracks produced on the polarizer may be 5.0 mm or less, 4.5 mm or less, or 4.0 mm or less. The length of the crack is a criterion determining a crack, and the length direction of the crack may be an MD direction of the polarizing plate.

The protective layer is a resin layer comprising an active energy ray-curable composition comprising an epoxy compound and an oxetane compound or a cured material thereof. An epoxy group of the epoxy compound and an oxetane functional group of the oxetane compound may be identified through an IR spectrum of the protective layer.

The protective layer performs a function of supporting and protecting the polarizer, and is directly formed on the polarizer without providing a separate adhesive layer therebetween. The method for forming the protective layer may use methods well known in the art, and for example, a method of coating a composition for forming a protective layer on one surface of a polarizer and curing the result may be used.

The epoxy compound and the oxetane compound may have a weight ratio of 9:1 to 1:9, and preferably 9:1 to 7:3. When satisfying the above-mentioned numerical range, different functions of the epoxy compound and the oxetane compound are effectively controlled leading to excellent storage modulus of the protective layer, and an advantage of effectively securing high temperature and high humidity durability of the polarizing plate is obtained.

The epoxy compound is for lowering a thermal expansion coefficient of the composition after curing, and for providing strength (hardness) of the protective layer formed from the composition, and may comprise an alicyclic epoxy compound or an aliphatic epoxy compound.

The alicyclic epoxy compound comprises one or more alicyclic epoxy rings, and means a compound having an epoxy group formed between adjacent two carbon atoms forming an aliphatic ring. Examples thereof may comprise dicyclopentadiene dioxide, limonene dioxide, 4-vinylcyclohexene dioxide, 2,4-epoxycyclohexylmethyl, 3,4-epoxycyclohexanecarboxylate, dicyclopentadiene dioxide, bis(3,4-epoxycyclohexylmethyl)adipate and the like, but are not limited thereto. In addition, in order to lower a thermal expansion coefficient of the composition after curing, and to provide strength (hardness) of the adhesive layer formed from the composition, 3,4-epoxycyclohexylmethyl-3,4'-epoxycyclohexanecarboxylate is preferred.

Examples of the aliphatic epoxy compound may comprise 1,4-cyclohexanedimethanol diglycidyl ether, novolac epoxy, bisphenol A-based epoxy, bisphenol F-based epoxy, brominated bisphenol-based epoxy, 1,6-hexanediol diglycidyl ether, trimethylolpropane triglycidyl ether, n-butyl glycidyl ether, aliphatic glycidyl ether (C12-C14), 2-ethylhexyl glycidyl ether, phenyl glycidyl ether, o-cresyl glycidyl ether, and nonyl phenyl glycidyl ether.

The oxetane compound is not particularly limited as long as it has at least one oxetanyl group in the molecule, and various oxetane compounds well known in the art may be used. Examples of the oxetane compound of the present disclosure may comprise 3-ethyl-3- [(3-ethyloxetan-3-yl)methoxymethyl] oxetane, 1,4-bis [(3-ethyloxetan-3-yl)methoxymethyl] benzene, 1,4-bis [(3-ethyloxetan-3-yl)methoxy] benzene, 1,3-bis [(3-ethyloxetan-3-yl)methoxy] benzene, 1,2-bis [(3-ethyloxetan-3-yl)methoxy] benzene, 4,4'-bis [(3-ethyloxetan-3-yl)methoxy] biphenyl, 2,2'-bis [(3-ethyloxetan-3-yl)methoxy] biphenyl, 3,3',5,5'-tetramethyl-4,4'-bis [(3-ethyloxetan-3-yl)methoxy] biphenyl, 2,7-bis [(3-ethyloxetan-3-yl)methoxy] naphthalene, bis [4-{(3-ethyloxetan-3-yl)methoxy}phenyl] methane, bis [2-{(3-ethyloxetan-3-yl)methoxy}phenyl] methane, 2,2-bis [4-{(3-ethyloxetan-3-yl)methoxy}phenyl] propane, an etherified denatured product of a novolac-type phenol-formaldehyde resin by 3-chloromethyl-3-ethyloxetane, 3(4),8(9)-bis [(3-ethyloxetan-3-yl)methoxymethyl] -tricyclo[5.2.1.0 2,6]decane, 2,3-bis [(3-ethyloxetan-3-yl)methoxymethyl] norbornane, 1,1,1-tris [(3-ethyloxetan-3-yl)methoxymethyl] propane, 1-butoxy-2,2-bis [(3-ethyloxetan-3-yl)methoxymethyl] butane, 1,2-bis [{2-(3-ethyloxetan-3-yl)methoxy}ethylthio] ethane, bis [{4-(3-ethyloxetan-3-yl)methylthio}phenyl] sulfide, 1,6-bis [(3-ethyloxetan-3-yl)methoxy] -2,2,3,3,4,4,5,5-octafluorohexane and the like, but are not limited thereto.

The protective layer may be formed from the active energy ray-curable composition comprising the epoxy compound and the oxetane compound, and the active energy ray-curable composition may comprise a photoinitiator or a photosensitizer.

Examples of the photoinitiator may comprise alpha-hydroxyketone-based compounds (ex. IRGACURE 184, IRGACURE 500, IRGACURE 2959, DAROCUR 1173; Ciba Specialty Chemicals (manufacturer)); phenylglyoxylate-based compounds (ex. IRGACURE 754, DAROCUR MBF; Ciba Specialty Chemicals (manufacturer)); benzyl dimethyl ketal-based compounds (ex. IRGACURE 651; Ciba Specialty Chemicals (manufacturer)); $\alpha$-aminoketone-based compounds (ex. IRGACURE 369, IRGACURE 907, IRGACURE 1300; Ciba Specialty Chemicals (manufacturer)); monoacyl phosphine-based compounds (MAPO) (ex. DAROCUR TPO; Ciba Specialty Chemicals (manufacturer)); bisacyl phosphene-based compounds (BAPO) (ex. IRGACURE 819, IRGACURE 819DW; Ciba Specialty Chemicals (manufacturer)); phosphine oxide-based compounds (ex. IRGACURE 2100; Ciba Specialty Chemicals (manufacturer)); metallocene-based compounds (ex. IRGACURE 784; Ciba Specialty Chemicals (manufacturer)); iodonium salts (ex. IRGACURE 250; Ciba Specialty Chemicals (manufacturer)); mixtures of one or more thereof (ex. DAROCUR 4265, IRGACURE 2022, IRGACURE 1300, IRGACURE 2005, IRGACURE 2010, IRGACURE 2020; Ciba Specialty Chemicals (manufacturer)) and the like. In the present disclosure, one type, or two or more types among these may be used, however, the photoinitiator is not limited thereto.

The photosensitizer is a compound capable of initiating an iodine-based cation initiator by being activated with long wavelength UV irradiation. Examples thereof may comprise iodonium bis(4-methylphenyl)hexafluorophosphate, [4-methylphenyl-(4-(2-methylpropyl)phenyl)]iodonium hexafluorophosphate, 4-isopropyl-4'-methyldiphenyliodonium-tetrakis(pentafluorophenyl)borate and the like, but are not limited thereto. The content of the photosensitizer is preferably from 0.01 parts by weight to 20 parts by weight, more preferably from 0.01 parts by weight to 10 parts by weight, and most preferably from 0.01 parts by weight to 5 parts by weight with respect to 100 parts by weight of the adhesive composition for a polarizing plate. In the present specification, the unit parts by weight means a weight ratio between each component.

The photoinitiator and the photosensitizer are preferably included in a weight ratio of 0.1:1 to 4:1 or 2:1 to 4:1. Satisfying the above-mentioned range has an advantage of increasing photoinitiation efficiency.

The polarizer is not particularly limited as long as it satisfies the force of shrinkage, and for example, films formed with polyvinyl alcohol (PVA) comprising iodine or a dichroic dye may be used. The polarizer may be prepared by dyeing a polyvinyl alcohol film with iodine or a dichroic dye, however, the method for preparing the same is not particularly limited. In the present specification, the polarizer means a state without comprising a protective layer (or low moisture-permeable substrate layer), and the polarizing plate means a state comprising a polarizer and a protective layer (or low moisture-permeable substrate layer).

Meanwhile, the polarizer may have a thickness of 5 $\mu$m to 40 $\mu$m, and more preferably 5 $\mu$m to 25 $\mu$m approximately. When the thickness of the polarizer is smaller than the above-mentioned range, optical properties may decline, and there is a problem in that preparing a thin film is difficult.

When the polarizer is a polyvinyl alcohol-based film, the polyvinyl alcohol-based film may be used without particular limit as long as it comprises a polyvinyl alcohol resin or a derivative thereof. Herein, the derivative of the polyvinyl alcohol may comprise, but is not limited to, a polyvinyl formal resin, a polyvinyl acetal resin and the like. Alternatively, as the polyvinyl alcohol-based film, commercially available polyvinyl alcohol-based films generally used for polarizer preparation in the art such as P30, PE30 and PE60 of Kuraray Co., Ltd., and M2000, M3000, M6000 and M4504L of the Nippon Gohsei Co., Ltd. may also be used. Although not limited thereto, the polyvinyl alcohol-based film favorably has a degree of polymerization of approximately 1,000 to 10,000, and preferably approximately 1,500 to 5,000.

When the degree of polymerization satisfies the above-mentioned range, molecular movements are free, and mixing with iodine, a dichroic dye or the like is smooth.

Between the polarizer and the low moisture-permeable substrate layer, an adhesive layer having a thickness of greater than or equal to 1 $\mu$m and less than or equal to 10 $\mu$m or greater than or equal to 2 $\mu$m and less than or equal to 4 $\mu$m may be further included, and the adhesive layer may be a cured material of an adhesive composition.

The adhesive composition is not particularly limited in the composition as long as it is for adhering the low moisture-permeable substrate layer on the polarizer, and examples thereof may comprise a mixture of an epoxy compound and an oxetane compound. Descriptions on the epoxy compound and the oxetane compound are the same as above.

One embodiment of the present specification provides a method for preparing the polarizing plate described above, the method comprising preparing a polarizer; providing a low moisture-permeable substrate layer on one surface of the polarizer; and forming a protective layer on the other surface of the polarizer.

The forming of a protective layer may comprise coating an active energy ray-curable composition on the other surface of the polarizer and curing the result.

The providing of a low moisture-permeable substrate layer on one surface of the polarizer may comprise coating an adhesive composition between the polarizer and the low moisture-permeable substrate layer and curing the result.

The providing of the low moisture-permeable substrate layer on one surface of the polarizer may be conducted using methods well known in the art. For example, the polarizer and the low moisture-permeable substrate may be supplied while being wound in each roll, however, the method is not limited thereto. The supply rate of each of the films is not particularly limited as long as it is a suitable value for a preparation process, but may be, for example, greater than or equal to 5 meter/min and less than or equal to 100 meter/min, or greater than or equal to 10 meter/min and less than or equal to 30 meter/min. This has an advantage in that the low moisture-permeable substrate layer stably adheres to the polarizer.

The active energy ray-curable composition may have viscosity of 50 cPs to 200 cPs, 50 cPs to 130 cPs, preferably 60 cPs to 130 cPs, and more preferably greater than or equal to 70 cPs and less than or equal to 130 cPs at 25°C. Satisfying the above-mentioned numerical range improves composition coatability leading to an advantage of excellent processability.

The polarizer may be elongated. In other words, according to the method for preparing the polarizing plate according to the present specification, the polarizer may further go through an elongation process before a supplying process of the polarizer. The elongation process of the polarizer is not particularly limited in the condition and the like.

The forming of a protective layer by coating an active energy ray-curable composition on the other surface of the polarizer may use a separate carrier film. Specifically, while supplying a carrier film, the composition is coated between the carrier film and the polarizer, and after the composition is cured, the carrier film may be peeled off from the polarizing plate.

The surface on which the active energy ray-curable composition is coated is not limited, and for example, the active energy ray-curable composition may be coated on the polarizer-adjoining surface of the carrier film.

The method of coating the active energy ray-curable composition is not particularly limited as long as it is capable of uniformly coating a necessary amount of the composition. For example, methods of spin coating, bar coating, roll coating, gravure coating, blade coating and the like may be used, and for a continuous process, roll coating is preferably used.

The method for preparing the polarizing plate may comprise pressurizing the polarizing plate in order to secure bonding strength with each constitution. Specifically, the pressurizing may be conducted with a pressure of 0.1 Mpa to 10 Mpa or 0.2 Mpa to 8 Mpa. Satisfying the above-mentioned numerical range has an advantage of effectively removing bubbles introduced when bonding the film while securing a stable running property without damaging the polarizer.

The method for preparing the polarizing plate may comprise curing the active energy ray-curable composition.

The method for preparing the polarizing plate may comprise curing the adhesive layer.

The curing of the active energy ray-curable composition and the curing of the adhesive layer may be conducted by irradiating active energy rays. A device used to irradiate the active energy rays is not particularly limited, and examples thereof may comprise a fusion lamp, an arc lamp, an LED and a low pressure lamp.

The active energy ray may have light intensity of 100 mJ/cm$^2$ to 1,000 mJ/cm$^2$, and preferably 500 mJ/cm$^2$ to 1,000mJ/cm$^2$, and irradiation time of the irradiated light may be from 1 second to 10 minutes, and preferably from 2 seconds to 30 seconds.

When satisfying the light intensity and the irradiation time ranges of the active energy ray, the curing rate of the protective layer is high, and excessive transfer of heat from a light source is prevented without declining appearance properties and optical properties of the film, and it minimizes the occurrences of running wrinkles on the polarizer leading to an advantage of superior productivity.

FIG. 2 is a schematic cross-sectional view illustrating an image display device according to one embodiment of the present specification.

When referring to FIG. 2, the image display device according to one embodiment of the present specification comprises the polarizing plate described above. The polarizing plate (100) described above may be attached on one surface or both surfaces of a liquid crystal panel (200). Herein, the polarizing plate (100) may be attached to the liquid crystal panel (200) through a adhesive layer (40).

To be attached to a display device panel or an optical film such as a retardation film, the polarizing plate may further comprise a adhesive layer as necessary on the other surface of the polarizer-adjoining surface of the protective layer. Specifically, the polarizing plate may further comprise a adhesive layer on a surface opposite to the polarizer-adjoining surface of the protective layer.

Herein, the adhesive layer may be formed using various adhesive agents well known in the art, and the type is not particularly limited. For example, the adhesive layer may be formed using a rubber-based adhesive agent, an acryl-based adhesive agent, a silicone-based adhesive agent, an urethane-based adhesive agent, a polyvinyl alcohol-based adhesive agent, a polyvinyl pyrrolidone-based adhesive agent, a polyacrylamide-based adhesive agent, a cellulose-based adhesive agent, a vinyl alkyl ether-based adhesive agent and the like. Considering transparency, heat resistance and the like, using an acryl-based adhesive agent is particularly preferred among these.

Meanwhile, the adhesive layer may be formed using a method of coating a adhesive agent on the top of the protective layer, or may also be formed using a method of attaching a adhesive sheet, which is prepared by coating a adhesive agent on a separate release sheet and then drying the result, on the top of the protective layer.

Such a polarizing plate of the present disclosure may be useful in an image display device such as a liquid crystal display device.

The image display device comprises a liquid crystal panel; an upper polarizing plate provided on an upper surface of the liquid crystal panel; and a lower polarizing plate provided on a lower surface of the liquid crystal panel.

The image display device according to one embodiment of the present specification comprises a liquid crystal panel; an upper polarizing plate provided on an upper surface of the liquid crystal panel; and the polarizing plate according to the present specification as a lower polarizing plate provided on a lower surface of the liquid crystal panel.

The image display device according to one embodiment of the present specification comprises a liquid crystal panel; the polarizing plate according to the present specification as an upper polarizing plate provided on an upper surface of the liquid crystal panel; and a lower polarizing plate provided on a lower surface of the liquid crystal panel.

The image display device according to one embodiment of the present specification comprises a liquid crystal panel; an upper polarizing plate provided on an upper surface of the liquid crystal panel; and a lower polarizing plate provided on a lower surface of the liquid crystal panel, and the upper polarizing plate and the lower polarizing plate are the polarizing plate according to the present specification.

Herein, types of the liquid crystal panel included in the liquid crystal display device are not particularly limited. For example, without being limited in the type, known panels comprising passive matrix-type panels such as a twisted nematic (TN)-type, a super twisted nematic (STN)-type, a ferroelectric (F)-type or a polymer dispersed (PD)-type; active matrix-type panels such as a two terminal-type or a three terminal-type; in plane switching (IPS)-type panels and vertical alignment (VA)-type panels may all be used. In addition, types of other constitutions forming a liquid crystal display device such as upper and lower substrates (ex. color filter substrate or array substrate) are not particularly limited as well, and constitutions known in the art may be employed without limit.

Hereinafter, the present specification will be described in more detail with reference to examples. However, the following examples are for illustrative purposes only, and the scope of the present specification is not limited thereby.

**<Preparation Example: Preparation of Active Energy Ray-Curable Composition>**

**<Preparation Example 1: Preparation of Composition for Forming Protective Layer >**

A mixture was prepared by mixing 65 parts by weight of 3,4-epoxycyclohexylmethyl-3',4'-epoxycyclohexanecarboxylate (product name Celloxide-2021) and 15 parts by weight of 1,4-cyclohexyl dimethanol diglycidyl ether (CHDMDGE) as an epoxy compound, and 20 parts by weight of 3-ethyl-3-[(3-ethyloxetan-3-yl)methoxymethyl]oxetane (TOAGOSEI Co., Ltd. ARON OXETANE OXT-221) as an oxetane compound, and 3 parts by weight of a photoinitiator (product name: IRGACURE 250) and 1 parts by weight of a photosensitizer(product name: ESACURE ITX) were added thereto with respect to 100 parts by weight of the mixture to prepare Composition for Forming Protective Layer 1.

**<Preparation Example 2: Preparation of Composition for Forming Protective Layer 2>**

A mixture was prepared by mixing 42 parts by weight of 3,4-epoxycyclohexylmethyl-3',4'-epoxycyclohexanecarboxylate (product name Celloxide-2021) and 28 parts by weight of 1,4-cyclohexyl dimethanol diglycidyl ether (CHDMDGE) as an epoxy compound, and 30 parts by weight of 3-ethyl-3-[(3-ethyloxetan-3-yl)methoxymethyl]oxetane (TOAGOSEI Co., Ltd. ARON OXETANE OXT-221) as an oxetane compound, and 3 parts by weight of a photoinitiator (product name: IRGACURE 250) and 1 parts by weight of a photosensitizer(product name: ESACURE ITX) were added thereto with respect to 100 parts by weight of the mixture to prepare Composition for Forming Protective Layer 2.

**<Preparation Example 3: Preparation of Composition for Forming Protective Layer 3>**

A mixture was prepared by mixing 80 parts by weight of 3,4-epoxycyclohexylmethyl-3',4'-epoxycyclohexanecarboxylate (product name Celloxide-2021) as an epoxy compound, and 20 parts by weight of 3-ethyl-3-[(3-ethyloxetan-3-yl)methoxymethyl]oxetane (TOAGOSEI Co., Ltd. ARON OXETANE OXT-221) as an oxetane compound, and 3 parts by weight of a photoinitiator (product name: IRGACURE 250) and 1 parts by weight of a photosensitizer(product name: ESACURE ITX) were added thereto with respect to 100 parts by weight of the mixture to prepare Composition for Forming Protective Layer 3.

**<Preparation Example 2: Preparation of Polarizing Plate>**

**<Comparative Example 1: Preparation of Polarizing Plate>**

An adhesive composition was coated on one surface of a polarizer (polyvinyl alcohol-based elongated film having a thickness of 17 $\mu$m, manufacturer: Nippon Gohsei Co., Ltd.) to laminate a low moisture-permeable substrate layer (polyethylene terephthalate film having a thickness of 80 $\mu$m, manufactured by Toyobo Co., Ltd. of Japan). Then, Composition for Forming Protective Layer 1 was coated and laminated on a surface of the polarizer on which the low moisture-permeable substrate layer is not laminated to prepare a polarizing plate. After that, a polarizing plate was prepared by curing the composition for forming a protective layer and the adhesive by irradiating ultraviolet rays using a fusion lamp. Herein, the thickness of the protective layer was 4.1 $\mu$m.

**<Reference Example 1: Preparation of Polarizing Plate>**

A polarizing plate was prepared in the same manner as in Comparative Example 1 except that Composition for Forming Protective Layer 2 was used instead of Composition for Forming Protective Layer 1, and the thickness of the protective layer was changed to 4.5 $\mu$m to 5 $\mu$m.

**<Reference Example 2: Preparation of Polarizing Plate>**

An adhesive composition was coated on one surface of a polarizer (polyvinyl alcohol-based elongated film having a thickness of 17 $\mu$m, manufacturer: Nippon Gohsei Co., Ltd.) to laminate a low moisture-permeable substrate layer (polyethylene terephthalate film having a thickness of 60 $\mu$m, manufactured by Toyobo Co., Ltd. of Japan). Then, Composition for Forming Protective Layer 1 was coated and laminated on a surface of the polarizer on which the low moisture-permeable substrate layer is not laminated to prepare a polarizing plate. After that, a polarizing plate was prepared by curing the composition for forming a protective layer and the adhesive by irradiating ultraviolet rays using a fusion lamp. Herein, the thickness of the protective layer was 5.9 $\mu$m.

**<Reference Example 3: Preparation of Polarizing Plate>**

A polarizing plate was prepared in the same manner as in Reference Example 2 except that the 60 $\mu$m low moisture-permeable substrate was changed to a 80 $\mu$m low moisture-permeable substrate.

**<Example 1: Preparation of Polarizing Plate>**

A polarizing plate was prepared in the same manner as in Comparative Example 1 except that the thickness of the protective layer was changed to 4.5 $\mu$m to 5 $\mu$m.

**<Example 2: Preparation of Polarizing Plate>**

A polarizing plate was prepared in the same manner as in Comparative Example 1 except that the thickness of the protective layer was changed to 5.9 $\mu$m.

**<Example 3: Preparation of Polarizing Plate>**

A polarizing plate was prepared in the same manner as in Comparative Example 1 except that the thickness

of the protective layer was changed to 6.5 $\mu$m.

### <Example 4: Preparation of Polarizing Plate>

A polarizing plate was prepared in the same manner as in Comparative Example 1 except that Composition for Forming Protective Layer 3 was used instead of Composition for Forming Protective Layer 1, and the thickness of the protective layer was changed to 4.5 $\mu$m to 5 $\mu$m.

### <Experimental Example 1: Evaluation of Heat Resistance>

For each of the polarizing plates, an experiment evaluating high temperature durability was conducted. The polarizing plate was attached on an upper surface and a lower surface of glass having a thickness of 2.7 T and a diagonal length of 55 inches or longer using a adhesive agent as a medium.

The polarizing plate-attached glass was introduced to a chamber, and after leaving the glass unattended for 100 hours, 250 hours, 500 hours and 1,000 hours (that is, final leaving time was 1,000 hours) at 80°C, the glass was taken out to identify crack occurrences. It was evaluated as "crack occurred" when one or more cracks were produced, and the results are summarized in the following Table 1. Herein, a crack having a length of longer than 5.0 mm was determined as the crack.

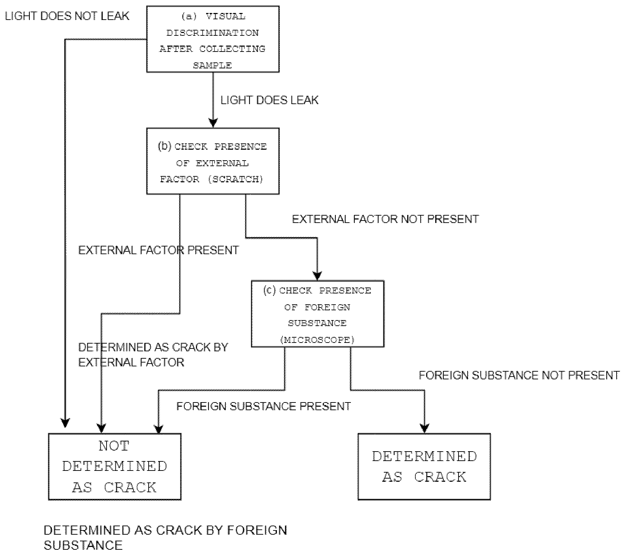

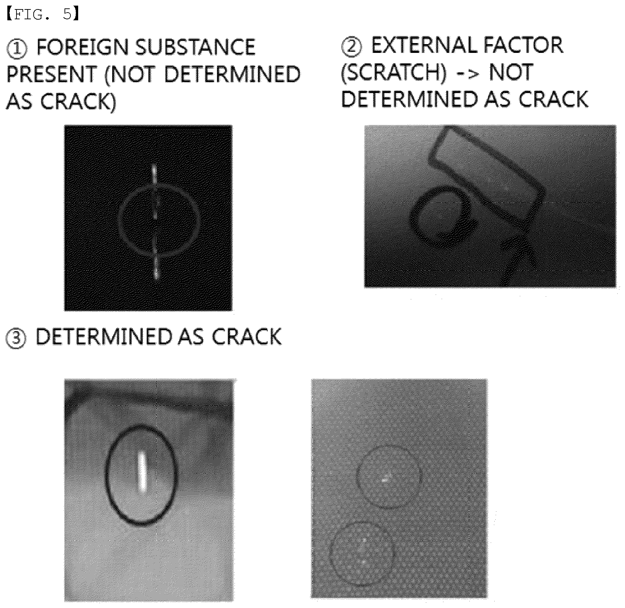

The method of evaluating whether corresponding to the crack is shown in FIG. 4 and FIG. 5.

Even when a crack occurred, it was determined as final crack not occurred (OK) when the crack was produced due to external factors such as a scratch, and it was determined as final crack occurred (NG) when the crack was produced due to a problem of heat resistance not caused by external factors.

As a result of the experiment, it was identified that the polarizing plate according to Comparative Example 1 had crack occurred, and this is shown in FIG. 3.

However, the polarizing plates according to Examples 1 to 3 had a sufficiently thick protective layer, and had an excellent polarizer protecting effect by the protective layer, and it was identified that cracks did not occur by properly controlling polarizer stress.

### <Experimental Example 2: Evaluation of Degree of Planarity>

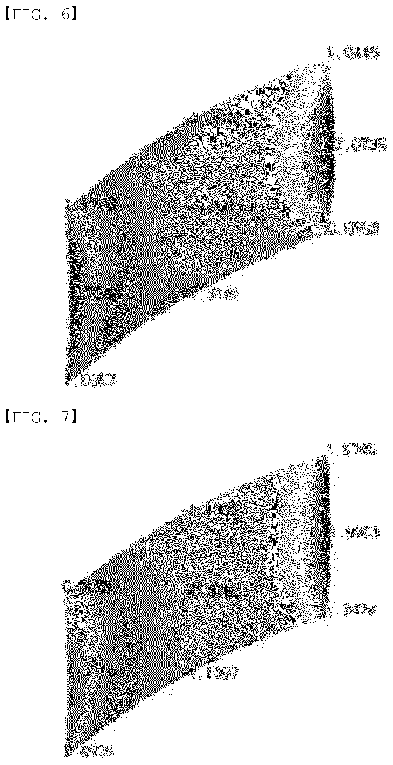

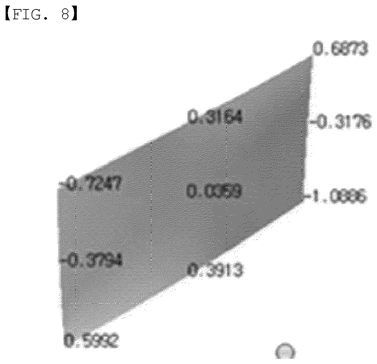

The prepared polarizing plate was attached on each of an upper surface and a lower surface of 32-inch glass having a thickness of 0.7 T to prepare a laminate. The laminate was introduced into a chamber with a temperature of 60°C for 72 hours, and then taken out when 24 hours passed to measure changes in the degree of planarity. The term of degree of planarity is a difference between a portion most bent to the upper polarizing plate side and a portion most bent to the lower polarizing plate, and the degree of planarity is measured using a 3D measurement device of Duck-In Corporation. Meanwhile, results of the measurements are shown in FIG. 6 (Reference Example 2), FIG. 7 (Reference Example 3) and FIG. 8 (Example 4).

Initial bending: measured immediately after laminating the low moisture-permeable substrate layer under an environment of 25°C and RH 50%

Late bending: measured after laminating the low moisture-permeable substrate layer, leaving the result in a 60°C chamber for 72 hours, and then leaving the result for 2 hours under an environment of 25°C and RH 50% outside the chamber

Constitutions and experimental results for the polarizing plates of the comparative examples and the example are shown in the following Table 1. The strength coefficient was calculated from thickness and storage modulus of the protective layer, and the shrinkage coefficient was calculated from force of shrinkage and thickness of the low moisture-permeable substrate layer.

[Table 1]

| Category | | Comparative Example 1 | Reference Example 1 | Reference Example 2 | Reference Example 3 | Example 1 | Example 2 | Example 3 | Example 4 |
|---|---|---|---|---|---|---|---|---|---|
| Protective Layer | Protective Layer Composition | Composition for Forming Protective Layer 1 | Composition for Forming Protective Layer 2 | Composition for Forming Protective Layer 1 | Composition for Forming Protective Layer 1 | Composition for Forming Protective Layer 1 | Composition for Forming Protective Layer 1 | Composition for Forming Protective Layer 1 | Composition for Forming Protective Layer 3 |
| | Protective Layer Thickness | 4.1 μm | 4.5 μm to 5 μm | 5.9 μm | 5.9 μm | 4.5 μm to 5 μm | 5.9 μm | 6.5 μm | 4.5 μm to 5 μm |
| | Protective Layer Storage Modulus (@80° C) | 1,500 Mpa | 800 Mpa | 1,500 Mpa | 1,500 Mpa | 1,500 Mpa | 1,500 Mpa | 1,500 Mpa | 2,500 Mpa |
| Low Moistu re-Permea ble Substrate Layer | Low Moist ure-Permeable Substrate Layer Force of Shrinkage (TD Direction) | 6.5 N to 7.5 N | 6.5 N to 7.5 N | 0.53 N | 0.53 N | 6.5 N to 7.5 N | 6.5 N to 7.5 N | 6.5 N to 7.5 N | 6.5 N to 7.5 N |
| | Thickness | 80 μm | 80 μm | 60 μm | 80 μm | 80 μm | 80 μm | 80 μm | 80 μm |
| Strength Coefficient | Unit (Mpa* μm) | 6,150 | 3,600 to 4,000 | 8,850 | 8,850 | 6,750 to 7,500 | 8,850 | 9,750 | 11,250 to 12,500 |
| Shrinkage Coefficient | Unit (N*μm ) | 520 to 600 | 520 to 600 | 31.8 | 42.4 | 520 to 600 | 520 to 600 | 520 to 600 | 520 to 600 |
| Polarizing late overal Force of Shrink age | Unit (N, TD Direc tion) | 7.5 to 8.5 | 7.5 to 8.5 | Not Measured | Not Measured | 7.5 to 8.5 | 7.5 to 8.5 | 7.5 to 8.5 | 7.5 to 8.5 |
| Experimental Example 1 | Evaluation of Heat Resis tance | NG | NG | Not Measured | Not Measured | OK | OK | OK | OK |
| Experimental Example 2 | Initial Bending | Not Measured | Not Measured | 0.5 | 1.1 | Not Measured | Not Measured | Not Measured | 0.7 |
| | Late Bending | Not Measured | Not Measured | 3.4 | 3.1 | Not Measured | Not Measured | Not Measured | 1.8 |

| Category | | Comparative Example 1 | Reference Example 1 | Reference Example 2 | Reference Example 3 | Example 1 | Example 2 | Example 3 | Example 4 |
|---|---|---|---|---|---|---|---|---|---|
| Protective Layer | Protective Layer Composition | Composition for Forming Protective Layer 1 | Composition for Forming Protective Layer 2 | Composition for Forming Protective Layer 1 | Composition for Forming Protective Layer 1 | Composition for Forming Protective Layer 1 | Composition for Forming Protective Layer 1 | Composition for Forming Protective Layer 1 | Composition for Forming Protective Layer 3 |

Storage modulus of protective layer: storage modulus at 80°C under measurement condition of protective layer temperature range -10°C to 160°C, temperature raising rate 5°C /min, strain 10% Force of shrinkage of low moisture-permeable substrate layer: force of shrinkage in TD direction when left unattended for 2 hours at temperature of 80°C

From the above-described results, it was identified that high temperature durability (heat resistance) was enhanced when adjusting the thickness of the protective layer. Specifically, when comparing Comparative Example 1 with Examples 1 to 3, it was identified that heat resistance decreased when the protective layer had a thickness of less than 4.5 $\mu$m. When adjusting a range of the strength coefficient value of the protective layer, results of enhancing high temperature durability of the protective layer were identified. Specifically, when comparing Reference Example 1 with Examples 1 to 4, it was identified that heat resistance decreased when the protective layer had a strength coefficient of less than 6,750 (Mpa*$\mu$m). When adjusting a range of the shrinkage coefficient value of the low moisture-permeable layer, it was identified that the degree of planarity decreased by decreasing overall high temperature durability of the polarizing plate. Specifically, when comparing Reference Examples 2 and 3 with Example 4, it was identified that changes in the degree of planarity were large when the shrinkage coefficient was less than 60 (N*$\mu$m). From the above-described results, it was identified that a polarizing plate having excellent high temperature durability was able to be provided when adjusting a thickness of the protective layer, a strength coefficient value of the protective layer and a shrinkage coefficient value of the low moisture-permeable substrate layer.

**<Experimental Example 3: Evaluation of Composition Processability>**

Processability tests were conducted for Compositions for Forming Protective Layer 1 to 3 prepared in Preparation Example 1. The composition for forming a protective layer was coated on one surface of the polarizer, and laminated with a lamination pressure of 0.4 Mpa, and herein, a supply rate of the film was 18 meter/min. The thickness of the formed protective layer was measured for the center and the side of the polarizing plate, and the results were recorded.

[Table 2]

| | Viscosity | Protective Layer Thickness ($\mu$m) | |
| --- | --- | --- | --- |
| | | Center | Side |
| Composition 1 | 100 cPs | 8.3 | 8 |
| Composition 2 | 60 cPs | 5.57 | 5.3 |
| Composition 3 | 120 cPs | 7.5 to 7.6 | 7.6 to 7.7 |

When referring to Table 2, Composition 2 having viscosity of just 60 cPs had significantly reduced coatability, and therefore, forming a protective layer with a large thickness was difficult. On the other hand, Compositions 1 and 3 having high viscosity were advantageous for forming a protective layer with a large thickness.

**Claims**

1. A polarizing plate comprising:

   a polarizer;
   a low moisture-permeable substrate layer provided on one surface of the polarizer; and
   a protective layer provided on the other surface of the polarizer,
   wherein the protective layer has a thickness of greater than or equal to 4.5 $\mu$m and less than or equal to 10 $\mu$m; and
   the protective layer is a resin layer comprising an active energy ray-curable composition comprising an epoxy compound and an oxetane compound or a cured material thereof.

2. The polarizing plate of Claim 1, wherein the protective layer has a strength coefficient value, which is represented by Mathematical Formula 1, of greater than or equal to 6,750 and less than or equal to 60,000:

   [Mathematical Formula 1]

   strength coefficient (Mpa*µm)=storage modulus of protective layer x thickness of protective layer

wherein, in Mathematical Formula 1,
the storage modulus of the protective layer is a storage modulus at 80°C under a measurement condition of a temperature range of -10°C to 160°C, a temperature raising rate of 5°C/min and a strain of 10%.

3. The polarizing plate of Claim 1, wherein a shrinkage coefficient value of the low moisture-permeable substrate layer represented by Mathematical Formula 2 is greater than or equal to 60 and less than or equal to 900:

[Mathematical Formula 2]

shrinkage coefficient (N*μm) = force of shrinkage of low moisture-permeable substrate layer x thickness of low moisture-permeable substrate layer

wherein, in Mathematical Formula 2,
the force of shrinkage of the low moisture-permeable substrate layer is a force of shrinkage in a TD direction after being left unattended for 2 hours at 80°C.

4. The polarizing plate of Claim 1, wherein the storage modulus of the protective layer is greater than or equal to 1,200 Mpa and less than or equal to 10,000 Mpa at 80°C under a measurement condition of a temperature range of -10°C to 160°C, a temperature raising rate of 5°C/min and a strain of 10%.

5. The polarizing plate of Claim 1, wherein the protective layer has a thickness of greater than or equal to 4.5 μm and less than or equal to 8.5 μm.

6. The polarizing plate of Claim 1, wherein a force of shrinkage of the low moisture-permeable substrate layer in a TD direction when left unattended for 2 hours at a temperature of 80°C is greater than or equal to 1 N and less than or equal to 10 N.

7. The polarizing plate of Claim 1, wherein the low moisture-permeable substrate layer has a thickness of greater than or equal to 40 μm and less than or equal to 100 μm.

8. The polarizing plate of Claim 1, wherein the low moisture-permeable substrate layer has a moisture permeability of 60 g/m$^2$*day or less.

9. The polarizing plate of Claim 1, wherein the protective layer and the low moisture-permeable substrate layer have a thickness ratio of 1:3 to 1:20.

10. The polarizing plate of Claim 1, wherein a force of shrinkage of the polarizing plate in an MD direction or a TD direction when left unattended for 2 hours at a temperature of 80°C is greater than or equal to 5 N and less than or equal to 10 N.

11. The polarizing plate of Claim 1, wherein a length of a crack produced on the polarizer when leaving the polarizing plate unattended for 1,000 hours at 80°C is 5.0 mm or less.

12. The polarizing plate of Claim 1, wherein the epoxy compound and the oxetane compound have a weight ratio of 9:1 to 1:9.

13. A method for preparing the polarizing plate of any one of Claims 1 to 12, the method comprising:

providing a polarizer;
providing a low moisture-permeable substrate layer on one surface of the polarizer; and
forming a protective layer on the other surface of the polarizer.

14. The method for preparing the polarizing plate of Claim 13, wherein the forming of the protective layer comprises coating an active energy ray-curable composition on the other surface of the polarizer and curing the active energy ray-curable composition, and
wherein the active energy ray-curable composition has a viscosity of 50 cPs to 200 cPs at 25°C.

15. An image display device comprising:

   a liquid crystal panel;
   a first polarizing plate provided on an upper surface of the liquid crystal panel; and
   a second polarizing plate provided on a lower surface of the liquid crystal panel,
   wherein the first polarizing plate and the second polarizing plate are the polarizing plate of any one of Claims 1 to 12.

【FIG. 1】

【FIG. 2】

【FIG. 3】

【FIG. 4】

LIGHT DOES NOT LEAK

(a) VISUAL
DISCRIMINATION
AFTER COLLECTING
SAMPLE

LIGHT DOES LEAK

(b) CHECK PRESENCE
OF EXTERNAL
FACTOR (SCRATCH)

EXTERNAL FACTOR NOT PRESENT

EXTERNAL FACTOR PRESENT

(c) CHECK PRESENCE
OF FOREIGN
SUBSTANCE
(MICROSCOPE)

DETERMINED AS CRACK BY
EXTERNAL FACTOR

FOREIGN SUBSTANCE NOT PRESENT

FOREIGN SUBSTANCE PRESENT

NOT
DETERMINED
AS CRACK

DETERMINED
AS CRACK

DETERMINED AS CRACK BY FOREIGN
SUBSTANCE

【FIG. 5】

① FOREIGN SUBSTANCE PRESENT (NOT DETERMINED AS CRACK)

② EXTERNAL FACTOR (SCRATCH) -> NOT DETERMINED AS CRACK

③ DETERMINED AS CRACK

【FIG. 6】

【FIG. 7】

【FIG. 8】

## INTERNATIONAL SEARCH REPORT

| International application No. |
|---|
| **PCT/KR2019/006387** |

**A. CLASSIFICATION OF SUBJECT MATTER**

*G02B 5/30(2006.01)i, B32B 7/02(2006.01)i*

According to International Patent Classification (IPC) or to both national classification and IPC

**B. FIELDS SEARCHED**

Minimum documentation searched (classification system followed by classification symbols)
G02B 5/30; C08G 59/06; C08L 63/00; C09J 133/08; C09J 163/00; G02B 1/10; G02F 1/1335; B32B 7/02

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: polarizer, protective layer, epoxy, oxetane

**C. DOCUMENTS CONSIDERED TO BE RELEVANT**

| Category* | Citation of document, with indication, where appropriate, of the relevant passages | Relevant to claim No. |
|---|---|---|
| Y | KR 10-2013-0013471 A (DONGWOO FINE-CHEM. CO., LTD.) 06 February 2013 See claim 1. | 1-15 |
| Y | KR 10-2015-0145175 A (SAMSUNG SDI CO., LTD.) 29 December 2015 See paragraph [0002] and claims 1, 11, 13. | 1-15 |
| A | KR 10-2016-0049449 A (SAMSUNG SDI CO., LTD.) 09 May 2016 See claims 1-5. | 1-15 |
| A | KR 10-1701076 B1 (FUJIFILM CORPORATION) 31 January 2017 See paragraphs [0016]-[0036] and claim 1. | 1-15 |
| A | KR 10-2018-0050120 A (LG CHEM, LTD.) 14 May 2018 See claims 1-4. | 1-15 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 SEPTEMBER 2019 (02.09.2019) | **03 SEPTEMBER 2019 (03.09.2019)** |

| Name and mailing address of the ISA/KR | Authorized officer |
|---|---|
| Korean Intellectual Property Office Government Complex Daejeon Building 4, 189, Cheongsa-ro, Seo-gu, Daejeon, 35208, Republic of Korea Facsimile No. +82-42-481-8578 | Telephone No. |

Form PCT/ISA/210 (second sheet) (January 2015)

INTERNATIONAL SEARCH REPORT
Information on patent family members

International application No.

**PCT/KR2019/006387**

| Patent document cited in search report | Publication date | Patent family member | Publication date |
|---|---|---|---|
| KR 10-2013-0013471 A | 06/02/2013 | KR 10-1790108 B1 | 25/10/2017 |
| KR 10-2015-0145175 A | 29/12/2015 | JP 2016-004205 A | 12/01/2016 |
| KR 10-2016-0049449 A | 09/05/2016 | JP 2016-085369 A | 19/05/2016 |
| KR 10-1701076 B1 | 31/01/2017 | JP 2017-083858 A | 18/05/2017 |
| | | TW 201421081 A | 01/06/2014 |
| | | US 2015-0212368 A1 | 30/07/2015 |
| | | US 9946110 B2 | 17/04/2018 |
| | | WO 2014-057949 A1 | 05/09/2016 |
| | | WO 2014-057949 A1 | 17/04/2014 |
| KR 10-2018-0050120 A | 14/05/2018 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020180060693

- JP 2007047498 A